# EUROPÄISCHE PATENTANMELDUNG

(11) **EP 1 401 073 A1**
(43) Veröffentlichungstag der Anmeldung: **24.03.2004**
(21) Anmeldenummer: 03019055.7
(22) Anmeldetag: 22.08.2003
(51) Int. Cl.: H02G 3/04

(54) **Verdrahtungskanal**

(30) Priorität: 20.09.2002 DE 20214553 U
(71) Anmelder: Tehalit GmbH & Co. KG, 67716 Heltersberg (DE)
(72) Erfinder: Eberle, Patrick, 66292 Riegelsberg (DE)
(74) Vertreter: Patentanwälte Möll und Bitterich

(57) **Zusammenfassung**

Gegenstand der Erfindung sind Verdrahtungskanäle, deren Seitenwände durch eine Vielzahl von durch Schlitze (3) getrennten flexiblen Stegen (2) gebildet sind. Um das Herausfallen von Kabeln und Leitungen zu verhindern, ist eine Kabelrückhalteleiste (10) vorgesehen. Diese wird an zwei benachbarten Stegen (2) befestigt. Dazu besitzt sie eine Stützfläche (15), daran eine pfeilförmige Haltenase (14), die durch die Schlitze (3) hindurchsteckbar und so an zwei Stegen (2) verankerbar ist, und zwei federnde pfeilförmige Haltezungen (16), die diese zwei Stege (2) von außen ergreifen. Die Haltezungen (16) können als zweiarmige Hebel ausgebildet sein und besitzen dann jeweils einen Lösearm (17).

## Beschreibung

Die Erfindung betrifft Verdrahtungskanäle gemäß dem Oberbegriff des Anspruchs 1.

Aus der US 3 890 459 ist ein Verdrahtungskanal bekannt, der aus einem Kanalunterteil mit U-förmigem Querschnitt besteht, gebildet durch einen Boden und zwei Seitenwände. Die Seitenwände werden gebildet durch regelmäßig beabstandete Stege, deren Enden so geformt sind, dass ein Deckel lösbar aufgerastet werden kann. Um bei einer senkrechten oder waagerechten Montage das Herausfallen von Kabeln und Leitungen aus dem geöffneten Kanalunterteil zu verhindern, sind Kabelrückhalteleisten vorgesehen. Diese besitzen einen Fuß, der so geformt ist, dass die Kabelrückhalteleiste zwischen zwei Stegen klemmend befestigt werden kann.

Es hat sich in der Praxis herausgestellt, dass die Verbindung zwischen Kabelrückhalteelement und Stegen wenig zuverlässig ist. Die wesentliche Ursache dafür liegt in der geringen Stabilität der einzelnen Stege. Zur Behebung dieses Nachteils wurden Kabelrückhalteelemente entwickelt, die sich über die volle Höhe der Stege erstrecken und innen an die Seitenwand angelehnt oder angectipst werden. Man vergleiche die DE 22 01 211 C oder die FR 27 77 129 A. Diese Kabelrückhalteelemente haben zwar einen festen Halt im Verdrahtungskanal, sind jedoch nicht mehr höhenverstellbar, so dass bei einem nur teilgefüllten Verdrahtungskanal die Kabel und Leitungen nicht mehr fixiert sind. Außerdem können diese Kabelrückhalteelemente nur bei leerem Kanal montiert und demontiert werden.

Es wurde auch schon versucht, völlig ohne Kabelrückhalteelemente auszukommen, indem die freien Enden der Stege vergleichbar einem Flaschenhals stark nach innen gezogen wurde. Man vergleiche die DE 27 14 885 C. Bei einer derartigen Konstruktion ist jedoch das nachträgliche Herausnehmen eines Kabels oder einer Leitung sehr erschwert. Deshalb konnten sich Verdrahtungskanäle mit diesem Querschnitt in der Praxis nicht durchsetzen.

Der vorliegenden Erfindung liegt daher die Aufgabe zugrunde, einen Verdrahtungskanal der eingangs genannten Art anzugeben, dessen Rückhalteleisten nicht nur jederzeit montiert und demontiert werden können sondern auch in der Höhe verstellbar sind und einen festen Halt haben.

Diese Aufgabe wird gelöst durch einen Verdrahtungskanal mit den Merkmalen des Anspruchs 1.

Wesentlicher Vorteil der erfindungsgemäßen Kabelrückhalteleiste ist die stabile Verbindung zwischen Leiste und Kanal, dadurch bedingt, dass der Leistenfuß aus drei pfeilförmigen Elementen besteht, zum einen aus der pfeilförmigen Haltenase, die durch die Schlitze hindurchsteckbar ist, und zum anderen aus den zwei federnden, pfeilförmigen Haltezungen, die die beiden Stege zusätzlich von außen ergreifen. Dadurch, dass sowohl die Kanalstege als auch insbesondere die Haltezungen federn sind, lässt sich die erfindungsgemäße Kabelrückhalteleiste an jeder beliebigen Stelle und in jeder beliebigen Höhe des Kabelkanals montieren, auch wenn der Kabelkanal bereits mehr oder weniger mit Kabeln, Leitungen oder Drähten gefüllt ist. Aufgrund der großen Berührungsfläche ist die Druckbelastung der einzelnen Stege verringert. Gleichzeitig ist die Haftreibung jedoch so hoch, dass die Kabelrückhalteleiste fest sitzt, bei Bedarf jedoch jederzeit verschoben oder auch abgenommen werden kann.

Um das Lösen der Kabelrückhalteleiste von den Stegen zu erleichtern, ist gemäß einer Weiterbildung der Erfindung die Haltezunge als zweiarmiger Hebel ausgebildet und besitzt einen Lösearm, den der Installateur bequem betätigen kann. Dadurch spreizen sich die pfeilförmigen Haltezungen von den beiden Stegen ab und die pfeilförmige Haltenase kann aus dem Schlitz zwischen den zwei Stegen herausgezogen werden.

Vorteilhafterweise ist an der Stützfläche mit Abstand zur Haltenase ein Positioniernocken angeformt, der zwischen die zwei Stege passt. Dadurch ist einem etwaigen Abkippen der Kabelrückhalteleiste optimal entgegengewirkt.

Gemäß einer Ausgestaltung der Erfindung besitzt die Halteleiste eingeformte Sollbruchstellen. Dadurch kann die Länge der Halteleiste vor Ort bequem auf die jeweils benötigte Länge gebracht werden.

Anhand der Zeichnung soll die Erfindung in Form eines Ausführungsbeispiels näher erläutert werden. Es zeigen
- Fig. 1: eine Draufsicht auf eine Kabelrückhalteleiste,
- Fig. 2: eine Frontsicht der Kabelrückhalteleiste der Fig. 1,
- Fig. 3: eine Seitenansicht der Kabelrückhalteleiste der Fig. 1 und 2 und
- Fig. 4: eine Schrägansicht eines Verdrahtungskanals mit montierter Kabelrückhalteleiste.

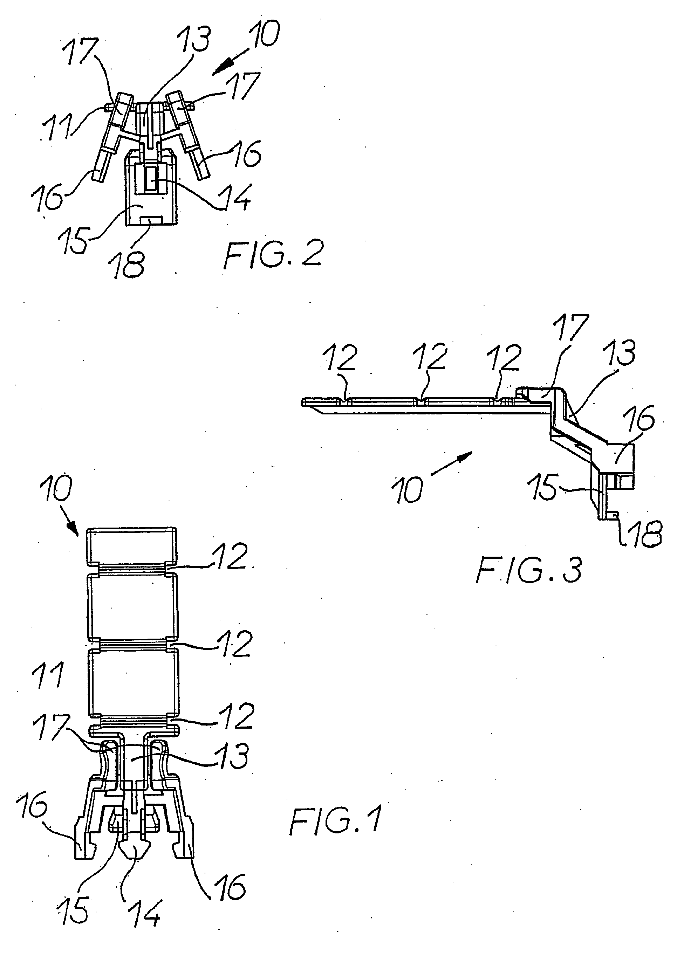

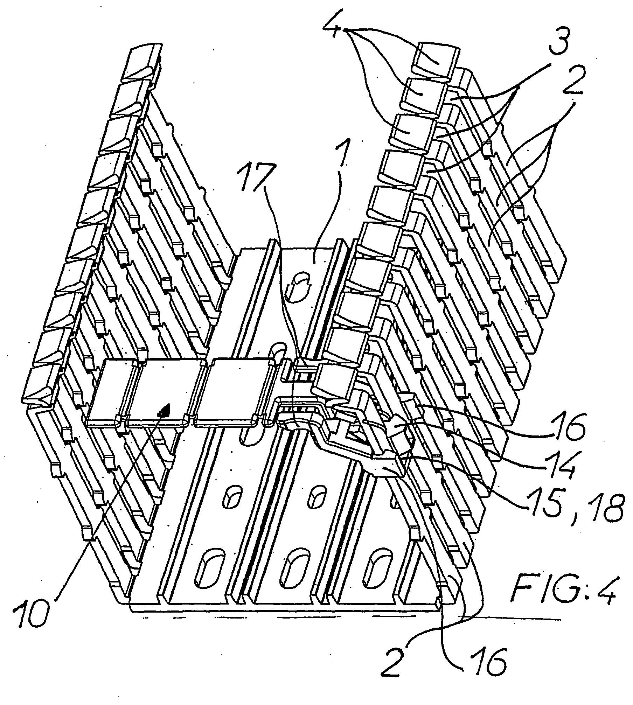

Die Fig. 1 bis 3 zeigen als Draufsicht, Frontsicht und Seitenansicht eine Kabelrückhalteleiste 10. Diese besteht im wesentlichen aus einer Halteleiste 11, hier mit eingeformten Sollbruchlinien 12, einer etwa senkrecht dazu orientierten Stützfläche 15, einer Verbindungsleiste 13 zwischen Halteleiste 11 und Stützfläche 15, einer pfeilförmigen Haltenase 14 an der Stützfläche 15, die durch die Schlitze zwischen zwei Stegen eines Verdrahtungskanals (Fig. 4) hindurchsteckbar und verankerbar ist, und zwei federnden, pfeilförmigen Haltezungen 16. Der Abstand zwischen der pfeilförmigen Haltenase 14 und den pfeilförmigen Haltezungen 16 ist auf die Breite der Kanalstege 2 (siehe Fig. 4) abgestimmt.

An der Stützfläche 15 erkennt man mit Abstand zur Haltenase 14 einen Positioniernocken 18, der genau zwischen zwei Stege 2 passt und so zusammen mit der Haltenase 14 ein Kippen der Kabelrückhalteleiste 10 wirksam verhindert.

Die Haltezungen 16 sind in diesem Ausführungsbeispiel als zweiarmige Hebel ausgebildet, wodurch sie Lösearme 17 aufweisen, die der Installateur bequem mit den Fingern zusammendrücken kann, wenn die Kabelrückhalteleiste 10 vom Verdrahtungskanal abgenommen werden soll.

Fig. 4 zeigt das Unterteil eines Verdrahtungskanals, im wesentlichen gebildet durch einen Boden 1, durch eine Vielzahl von durch Schlitze 3 getrennten, flexiblen Stegen 2 gebildeten Seitenwänden und Deckelhalteprofilen 4 an den freien Enden der Stege 2. Auf zwei benachbarte Stege 2 ist eine Kabelrückhalteleiste 10 aufgesteckt. Die pfeilförmige Haltenase 14 ist durch den Schlitz 3 zwischen zwei benachbarten Stegen 2 hindurchgesteckt, wobei die Stege 2 federnd ausweichen, und hinter den beiden Stegen 2 verankert. Die beiden Haltezungen 16 haben sich federnd von außen gegen die beiden benachbarten Stege 2 angelegt. Dadurch sitzt die Kabelrückhalteleiste 10 optimal fest. Durch Zusammendrücken der beiden Lösearme 17 lassen sich die Haltezungen 16 spreizen, wenn die Kabelrückhalteleiste 10 in der Höhe verschoben oder ganz abgenommen werden soll.

## Patentansprüche

1. Verdrahtungskanal, im wesentlichen umfassend
- ein Kanalunterteil mit
― einem Boden (1),
― Seitenwänden, gebildet durch eine Vielzahl von durch Schlitze (3) getrennten, flexiblen Stegen (2)
― und gegebenenfalls Deckelhalteprofilen (4) an den freien Enden der Stege (2)
- und wenigstens eine Kabelrückhalteleiste (10), lösbar zu befestigen an den Stegen(2),
**gekennzeichnet durch** die Merkmale:
- die Kabelrückhalteleiste (10) ist gebildet **durch**
― eine Halteleiste (11),
― eine etwa senkrecht dazu orientierte Stützfläche (15),
― eine Verbindungsleiste (13) zwischen Halteleiste (11) und Stützfläche (15),
― eine pfeilförmige Haltenase (14), die **durch** die Schlitze (3) hindurchsteckbar und so an zwei Stegen (2) verankerbar ist
― und zwei federnde, pfeilförmige Haltezungen (16), die diese zwei Stege (2) von außen ergreifen.

2. Kanal nach Anspruch 1, **gekennzeichnet durch** die Merkmale:
- die Haltezunge (16)
― ist als zweiarmiger Hebel ausgebildet
― und besitzt einen Lösearm (17).

3. Kanal nach Anspruch 1 oder 2, **gekennzeichnet durch** die Merkmale:
- an der Stützfläche (15) ist ein Positioniernocken (18) angeformt,
- der Positioniernocken (18) passt zwischen die zwei Stege (2).

4. Kanal nach einem der Ansprüche 1 bis 3, **gekennzeichnet durch** das Merkmal:
- die Halteleiste (11) besitzt eingeformte Sollbruchstellen (12).
